# EUROPEAN PATENT SPECIFICATION

(11) **EP 2 019 560 B1**
(45) Date of publication and mention of the grant of the patent: **04.07.2018**
(21) Application number: 07702072.5
(22) Date of filing: 15.01.2007
(51) Int. Cl.: H04W 48/20, H04W 28/18, H04W 36/26

(54) **A METHOD FOR ENSURING THE QUALITY OF SERVICE (QOS) OF THE PACKET TRAFFIC**
VERFAHREN ZUR SICHERSTELLUNG DER DIENSTQUALITÄT (QOS) DES PAKETVERKEHRS
PROCÉDÉ ASSURANT LA QUALITÉ DE SERVICE (QOS) DU TRAFIC PAR PAQUETS

(30) Priority: 18.05.2006 CN 200610081335
(43) Date of publication of application: 28.01.2009
(73) Proprietor: Huawei Technologies Co., Ltd., Longgang District Shenzhen, Guangdong 518129 (CN)
(72) Inventor: ZHAO, Gang, Shenzhen Guangdong 518129 (CN)
(74) Representative: Pfenning, Meinig & Partner mbB
(86) International application number: PCT/CN2007/000140
(87) International publication number: WO 2007/134505

(56) References cited:
- EP-A1- 1 458 148
- EP-A1- 1 594 334
- EP-A2- 1 347 614
- WO-A1-01/15482
- WO-A1-01/35586
- WO-A2-2004/102848
- WO-A2-2005/084146
- CN-A- 1 753 554
- CN-A- 1 753 558
- US-A1- 2005 068 917

## Description

### Technical Field

The present invention relates to a technology for processing packet services in wireless communications, and in particular, to a method for ensuring the quality of service of packet services.

### Background

In a packet communication system, a mobile terminal (MT) requires the communication network to provide different quality of service (QoS) for different service types while using packet services, that is, to allocate network resources (primarily network bandwidth) of different quality. For example, when the user wants to watch a football match on an MT, the network must ensure certain bandwidth quality, for instance, at least a 100 Kbps bandwidth for communications.

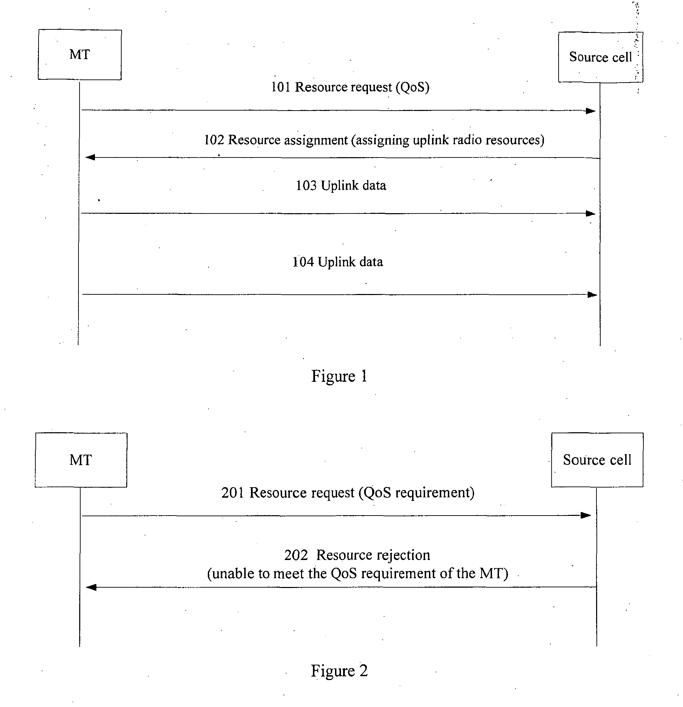

Generally, the MT negotiates the QoS with the network before using a packet service. During the negotiation, the MT sends a QoS requirement to the network, and the network returns the MT a feedback about available QoS according to the resource status. Figure 1 is a packet service access flowchart when the network meets the QoS requirement of the MT of the prior art. As shown in Figure 1, the access process includes the following steps:
Step 101: An MT sends a resource request to a source cell, which currently serves the MT, carrying the QoS requirement information.
Step 102: The source cell allocates radio uplink resources according to the QoS requirement of the MT if the radio resources meet the QoS requirement, and notifies the MT of the allocated radio resources through a resource allocation message.
Step 103: The MT transmits uplink data via the radio resources allocated by the source cell.
Step 104: The MT continues transmitting uplink data via the radio resources allocated by the source cell.

Due to the limitation of network resources, the network may be unable to ensure the QoS determined through negotiation or required by the MT. For example, after cell reselection or handover occurs, the target cell can not meet the QoS required by the MT. In this case, the prior art provides the following three methods to handle the problem:
(1) Lowering priority: Continue providing the requested services for the MT by lowering the QoS.
(2) Preemption: The MT of a higher priority preempts the resources of the MT of a lower priority to ensure QoS for the MT of a higher priority.
(3) Rejection: Reject the service request of the MT when the QoS required by the MT cannot be ensured.

The solution which continues providing services for the MT by lowering the QoS priority, however, is sometimes unacceptable. For example, when the user watches a football match on an MT, the video packet service requires at least a 100 Kbps bandwidth; when the user is moving, cell reselection occurs. A new cell is selected, but the resources of the new cell are not enough to meet the 100 Kpbs bandwidth requirement. Suppose the network chooses to continue providing services for the MT by lowering QoS, for example, reducing the bandwidth to 60 Kbps. In this case, the user prefers giving up watching the football match due to insufficient bandwidth. That is because the 100 Kpbs bandwidth is the minimum bandwidth required for watching a football match, namely, the minimum QoS acceptable to the user. Unless the network meets this requirement, it is impracticable to continue providing services by lowering QoS.

If the QoS is ensured for the MT of a higher priority through preemption, services cannot be ensured for the MT of a lower priority, which reduces the user satisfaction on the whole.

Figure 2 is a packet service access flowchart when the network doesn't meet the QoS requirement of the MT of prior art. As shown in Figure 2, the access process includes the following steps:
Step 201: An MT sends a resource request to the source cell (namely, the cell that serves the MT currently), carrying the QoS requirement information.
Step 202: According to the resource status, the source cell determines it can not meet the QoS required by the MT, and sends a resource rejection message to the MT.

The foregoing processing method provided by the prior art fails to maximally ensure the QoS required by the MT. When a 2G network and a 3G network coexist and an MT in a 3G cell reselects or is handed over to a 2G cell, the probability of service interruption will be higher.

### Summary

The embodiments of the invention provide a method as described in claim 1 for ensuring QoS of packet services to improve QoS of packet services. The dependent claims describe advantageous embodiments of the method according to claim 1. In the following, parts of the description and drawings referring to embodiments which are not covered by the claims are not presented as embodiments of the invention, but as examples useful for understanding the invention.

In the embodiments of the invention, if a cell can not provide the resources compliant with the QoS requirement for the packet service of an MT due to resource limitation, the cell allocates the MT to an adjacent cell, and the adjacent cell handles the packet service according to its resource status. The embodiments of the invention maximally fulfill the QoS requirement of the MT, improve the QoS of packet services on a communication network, and reduce the service interruption caused by inability to fulfill the QoS requirement of the user as against the prior art.

WO 2005/084146A2 describes a system for transmitting quality of service (QoS) information of a target base station for admitted service flows during a handover operation. The system comprises providing a service to a mobile station from a serving base station and receiving at the serving base station a handover request from the mobile station. The serving base station then provides a handover notification to a target base station wherein the handover notification comprises a QoS parameter associated with the service. The serving base station then receives from the target base station on a handover notification response, wherein the handover notification response comprises service level prediction information that is determined in response to the QoS parameter associated with the service. Finally, the serving base station provides a handover response comprising the service level prediction information.

WO 01/35586A1 describes a method and apparatus for facilitating network controlled handover in a wireless network. The method employs packet switching and uses of shared resource. The method provides network element controlled handover of a mobile unit by providing packet routing for a plurality of mobile units to facilitate handover of at least one mobile unit. The base station system employs a memory element that contains stored radio resource requirement data, on a per mobile unit basis.

EP 1 458 148 A1 describes a QoS-aware handover procedure in a typical dynamic mobile ad-hoc scenario wherein the connectivity of the applied devices is unpredictably time-varying, due to the mobility of mobile nodes, handovers will inevitably frequently occur. Resources are pre-allocated along potential routing paths in advance, and the flow traffic is redirected to the path having the best available QoS capabilities.

### Brief Description of the Drawings

Figure 1 is a packet service access flowchart when the network meets the QoS requirement of the MT of the prior art;
Figure 2 is a packet service access flowchart when the network doesn't meet the QoS requirement of the of the prior art; and
Figure 3 is a flowchart of ensuring QoS of packet services in an embodiment of the invention.

### Detailed Description

The present invention is hereinafter described in detail with reference to the embodiments and accompanying drawings.

An embodiment of the invention provides a method for ensuring QoS of packet services, including: when a source cell receives a packet service resource request from an MT and determines that its resources can not meet the requested QoS for the packet service, the source cell allocates the MT to an adjacent cell of the source cell so that the adjacent cell continues handling the packet service requested by the MT.

The embodiments of the invention are applicable to the process of handling packet services where QoS is required, for example, the process of a mobile terminal accessing a network, the process of a mobile terminal transmitting packet service data, and the packet handover process of a mobile terminal. The embodiment described herein is applied to the process of the MT accessing a network. The embodiments of the invention applied to other processes are based on the same principle, and are not described further.

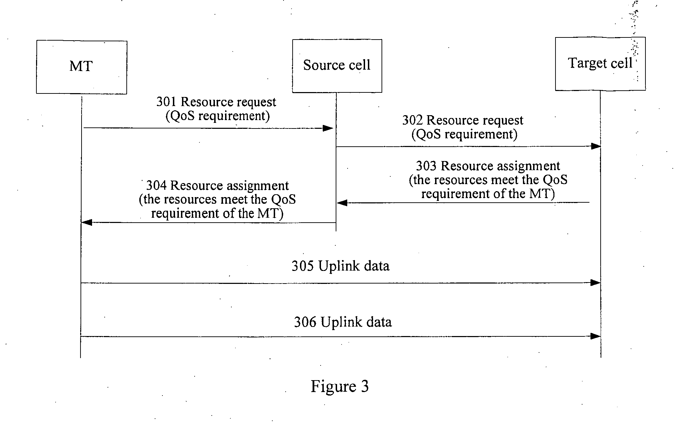

Figure 3 is a flowchart of ensuring QoS of packet services in an embodiment of the invention. In this embodiment, when the source cell can not meet the QoS requirement of the MT in the terminal access process, the MT will access the target cell. The source cell is the cell that serves the MT currently, and the target cell is an adjacent cell selected by the source cell. The handling process includes the following steps:
Step 301: The MT sends a packet service resource request in the source cell (the cell that serves the MT currently), carrying the QoS requirement information.
Step 302: When the source cell determines that its resources are not enough to meet the QoS requirement of the packet service requested by the MT, the source cell selects one of its adjacent cells as a target cell, and sends the resource request that contains the QoS requirement information to the target cell.
Step 303: The target cell receives the resource request sent by the source cell, and allocates radio resources to the MT according to the QoS requirement information in the request.

Specifically in this step, if the resources of the target cell meet the QoS requirement, the target cell allocates radio resources compliant with the QoS requirement to the MT, and provides service resources for the packet service of the MT according to the allocated resources. That is, according to the path of receiving the resource request, the target cell returns a resource allocation message to the source cell, carrying the information about the allocated resources (if the resource request is forwarded through multiple cells, the resource allocation message is forwarded to the MT along the original path); and step 304 to step 306 are executed. If the resources of the target cell are not enough to meet the QoS requirement, the target cell rejects the packet service request of the MT (that is, the target cell returns a resource request rejection message to the source cell, and the source cell rejects the packet service request of the MT). Alternatively, if the resources of the target cell are not enough to meet the QoS requirement, the target cell sends the resource request to one of the adjacent cells of the target cell, carrying the QoS requirement information; and the adjacent cell that receives the resource request performs step 303 again.

If the target cell can not meet the QoS requirement and sends a resource request to the source cell adjacent to it (that is, the source cell receives the resource request of the same MT returned by the target cell), the source cell rejects the packet service corresponding to the resource request of the MT.

Step 304: The source cell receives the resource allocation message of the target cell, and sends a resource allocation message to the MT, carrying the information about the radio resources allocated by the target cell to notify the MT to access the target cell.

Step 305: The MT receives the resource allocation message of the source cell, and finds that the resources of the target cell are allocated. Therefore, the MT accesses the target cell, monitors the resources allocated by the target cell, and transmits uplink data via the allocated resources.

Step 306: The MT continues monitoring the resources allocated by the target cell, and continues sending uplink data blocks on the allocated resources.

In the foregoing step 302, the source cell may determine that all its adjacent cells meet the QoS requirement of the MT. In this case, the source cell needs to select any of the adjacent cells as a target cell. Or, the source cell may determine that an adjacent cell meets or possibly meets the QoS requirement of the MT through relevant information, and select one adjacent cell that meets or possibly meets the QoS requirement as a target cell. For the latter processing mode, there are three possible ways:
(1) The source cell obtains information about the resource status of its adjacent cells, selects an adjacent cell which meets the QoS requirement from the adjacent cells, and sends a resource request to the selected adjacent cell. The specific method for selecting an adjacent cell may be: the source cell sorts the adjacent cells according to the resource status of the adjacent cells, and selects an adjacent cell with the best resources. The source
   cell may obtain information about the resource status of the adjacent cells in the following ways at least: (a) The source cell sends a request for obtaining resource information to the adjacent cells, and the adjacent cells return the resource information to the source cell after receiving the request; (b) each cell sends its resource information to the adjacent cells regularly or when the resource status changes. The source cell obtains the resource status of the adjacent cells according to the resource information sent by the adjacent cells; (c) if the source cell and its adjacent cells have the same base station controller, the source cell can obtain information about the resource status of the adjacent cells from the base station controller.
(2) The source cell obtains the transmission quality of the adjacent cells from the measurement report of each cell reported by the MT (the measurement report is sent when the MT accesses the source cell), selects an adjacent cell of the best transmission quality, and sends a resource request to the selected adjacent cell.
(3) The source cell obtains information about the resource status of the adjacent cells, and the transmission quality of the adjacent cells from the measurement report of each cell reported by the MT, selects an adjacent cell of high transmission quality which meets the QoS requirement according to the resource status and the transmission quality, and sends a resource request to the selected adjacent cell. The cell of the best transmission quality among all the cells meeting the QoS requirement may be regarded as a cell of high transmission quality.

In step 303, when the target cell selects its adjacent cell as a new target cell, the preceding method for selecting an adjacent cell as a target cell may apply.

An example useful for understanding the invention also provides a system for ensuring QoS of packet services, including an MT and a first base station (the base station of the source cell). The system may further include a second base station (the base station of an adjacent cell of the source cell). The system may include an MT and at least three base stations, namely, a first base station, a second base station, and a third base station (at least one base station of an adjacent cell of the adjacent cell of the source cell).

When the MT requests the first base station to allocate packet service resources, the first base station judges whether the resources of the source cell meet the QoS requirement of the MT. If the resources of the source cell don't meet the QoS requirement, the first base station requests the second base station to allocate resources to the MT.

Furthermore, the base stations requested to allocate resources to the MT, every base station except the first base station (namely, the second or the third base station) may also judge whether the resources of the cell meet the QoS requirement. If the resources of the cell meet the QoS requirement, the base station allocates resources to the MT, and provides services for the MT via the allocated resources; if the resources of the cell doesn't meet the QoS requirement, the base station rejects the request of the MT, or requests the third base station (the base station of adjacent cells of the cell) to allocate resources to the MT.

An example useful for understanding the invention provides an apparatus for ensuring QoS of packet services, including (i) a first module, configured to judge whether the resources of a cell meet the QoS required by an MT when the MT requests to allocate packet service resources; (ii) a second module, configured to request an adjacent cell of the cell to allocate resources to the MT when the resources of the cell doesn't meet the QoS required by the MT. Here, the apparatus may be the base station of the source cell of the MT. In this case, the first module judges whether the resources of the cell meet the QoS requirement of the MT when the MT requests the first module to allocate resources.

When the resources of an adjacent cell of the source cell cannot meet the QoS requirement of the MT, the adjacent cell of the source cell may request an adjacent cell allocate resources to the MT. The apparatus may be a base station except the base station of the source cell. In this case, the first module of the apparatus is configured to judge whether the resources of the cell meet the QoS requirement of the MT when an adjacent cell of the cell requests to allocate resources to the MT.

The specific principle for implementing the foregoing system and apparatus has been detailed earlier, and is not described further.

## Claims

1. A method for ensuring quality of service, QoS, of packet services, when a mobile terminal, MT, requests (301) a source cell of the MT to allocate packet service resources, the method comprising:
requesting (302), by the source cell, an adjacent cell of the source cell to allocate (303, 304) packet service resources to the MT when resources of the source cell can not meet a QoS requirement requested by the MT;
rejecting, by the adjacent cell of the source cell, the request of the MT or
requesting, by the adjacent cell of the source cell, an adjacent cell of the adjacent cell of the source cell to allocate packet service resources to the MT when the adjacent cell of the source cell determines its resources can not meet the QoS requirement; and
allocating, by the adjacent cell of the source cell, packet service resources to the MT when the adjacent cell of the source cell determines its resources meet the QoS requirement;
wherein the MT requests the source cell to allocate packet service resource through sending a resource request which carries the QoS requirement;
the requesting an adjacent cell to allocate resources to the MT comprises sending the resource request which carries the QoS requirement to the adjacent cell; and
the rejecting the request comprises
returning, by the adjacent cell of the source cell, the request to the source cell through a path of receiving the request; and
rejecting, by the source cell, the request when the request from the adjacent cell and the request from the MT are the same request.

2. The method according to claim 1, wherein the requesting an adjacent cell to allocate packet service resources to the MT, comprises:
selecting, by the source cell, an adjacent cell from one or more adjacent cells.

3. The method according to claim 1, further comprising:
selecting, by the adjacent cell of the source cell, an adjacent cell from one or more adjacent cells of the adjacent cell of the source cell.

4. The method according to any one of claims 2 or 3, wherein the selecting an adjacent cell from one or more adjacent cells comprises:
selecting the adjacent cell of the best transmission quality from the one or more adjacent cells.

5. The method according to claim any one of claims 2 or 3, wherein the selecting an adjacent cell from one or more adjacent cells comprises:
selecting the adjacent cell whose resources meet the QoS requirement from the one or more adjacent cells.

6. The method according to claim any one of claims 2 or 3, wherein the selecting an adjacent cell from one or more adjacent cells comprises:
selecting at least one adjacent cell whose resources meet the QoS requirement from the one or more adjacent cells, and
selecting the adjacent cell of the best transmission quality from the at least one adjacent cell.

7. The method according to claim 1, wherein the MT requests the source cell to allocate packet service resource through sending a resource request which carries the QoS requirement, and the source cell requests the adjacent cell of the source cell to allocate resources to the MT through sending the resource request which carries the QoS requirement to the adjacent cell of the source cell.

8. The method according to claim 4 or 6, wherein the transmission quality of the one or more adjacent cells is reported by the MT.

9. The method according to claim 5 or 6, wherein resource information of each of the one or more adjacent cells is sent to the source cell by each of the one or more adjacent cells or is obtained from a base station controller.

## Patentansprüche

1. Verfahren zum Sicherstellen der Dienstqualität, QoS, von Paketdiensten, wenn ein mobiles Endgerät, MT, eine Quellenzelle des MT auffordert (301), Paketdienstbetriebsmittel zuzuweisen, wobei das Verfahren Folgendes umfasst:
Auffordern (302) durch die Quellenzelle einer benachbarten Zelle der Quellenzelle, dem MT Paketdienstbetriebsmittel zuzuweisen (303, 304), wenn Betriebsmittel der Quellenzelle eine von dem MT angeforderte QoS nicht erfüllen können;
Zurückweisen durch die benachbarte Zelle der Quellenzelle der Anforderung des MT oder
Auffordern durch die benachbarte Zelle der Quellenzelle einer benachbarten Zelle der benachbarten Zelle der Quellenzelle, dem MT Paketdienstbetriebsmittel zuzuweisen, wenn die benachbarte Zelle der Quellenzelle bestimmt, dass ihre Betriebsmittel die QoS-Anforderung nicht erfüllen können; und
Zuweisen durch die benachbarte Zelle der Quellenzelle von Paketdienstbetriebsmitteln zu dem MT, wenn die benachbarte Zelle der Quellenzelle bestimmt, dass ihre Betriebsmittel die QoS-Anforderung erfüllen;
wobei das MT die Quellenzelle auffordert, Paketdienstbetriebsmittel zuzuweisen, indem es die Betriebsmittelaufforderung, die die QoS-Anforderung führt, sendet;
das Auffordern einer benachbarten Zelle, Betriebsmittel dem MT zuzuweisen, das Senden der Betriebsmittelaufforderung, die die QoS-Anforderung führt, zu der benachbarten Zelle umfasst; und
das Zurückweisen der Anforderung Folgendes umfasst:
Zurückleiten durch die benachbarte Zelle der Quellenzelle der Aufforderung zu der Quellenzelle über einen Pfad, auf dem die Aufforderung empfangen wird; und
Zurückweisen durch die Quellenzelle der Aufforderung, wenn die Aufforderung von der benachbarten Zelle und die Aufforderung von dem MT dieselbe Aufforderung sind.

2. Verfahren nach Anspruch 1, wobei das Auffordern einer benachbarten Zelle, dem MT Paketdienstbetriebsmittel zuzuweisen, Folgendes umfasst:
Auswählen durch die Quellenzelle einer benachbarten Zelle aus einer oder mehreren benachbarten Zellen.

3. Verfahren nach Anspruch 1, das ferner Folgendes umfasst:
Auswählen durch die benachbarte Zelle der Quellenzelle einer benachbarten Zelle aus einer oder mehreren benachbarten Zellen der benachbarten Zelle der Quellenzelle.

4. Verfahren nach einem der Ansprüche 2 oder 3, wobei das Auswählen einer benachbarten Zelle aus einer oder mehreren benachbarten Zellen Folgendes umfasst:
Auswählen der benachbarten Zelle mit der besten Übertragungsqualität aus der einen oder den mehreren benachbarten Zellen.

5. Verfahren nach einem der Ansprüche 2 oder 3, wobei das Auswählen einer benachbarten Zelle aus einer oder mehreren benachbarten Zellen Folgendes umfasst:
Auswählen der benachbarten Zelle, deren Betriebsmittel die QoS-Anforderung erfüllen, aus der einen oder den mehreren benachbarten Zellen.

6. Verfahren nach einem der Ansprüche 2 oder 3, wobei das Auswählen einer benachbarten Zelle aus einer oder mehreren benachbarten Zellen Folgendes umfasst:
Auswählen wenigstens einer benachbarten Zelle, deren Betriebsmittel die QoS-Anforderung erfüllen, aus der einen oder den mehreren benachbarten Zellen und Auswählen der benachbarten Zelle mit der besten Übertragungsqualität aus der wenigstens einen benachbarten Zelle.

7. Verfahren nach Anspruch 1, wobei das MT die Quellenzelle auffordert, Paketdienstbetriebsmittel zuzuweisen, indem es eine Betriebsmittelanforderung, die die QoS-Anforderung führt, sendet, und die Quellenzelle die benachbarte Zelle der Quellenzelle auffordert, dem MT Betriebsmittel zuzuweisen, indem sie die Betriebsmittelanforderung, die die QoS-Anforderung führt, zu der benachbarten Zelle der Quellenzelle sendet.

8. Verfahren nach Anspruch 4 oder 6, wobei die Übertragungsqualität der einen oder der mehreren benachbarten Zellen durch das MT berichtet wird.

9. Verfahren nach Anspruch 5 oder 6, wobei Betriebsmittelinformationen jeder der einen oder der mehreren benachbarten Zellen zu der Quellenzelle durch jede der einen oder der mehreren benachbarten Zellen gesendet werden oder von einer Basisstation-Steuereinheit erhalten werden.

## Revendications

1. Procédé pour assurer la qualité de service, QoS, de services par paquets, lorsqu'un terminal mobile, MT, demande (301) à une cellule source du MT d'allouer des ressources de service par paquets, le procédé comprenant les étapes suivantes :
demander (302), par la cellule source, à une cellule adjacente de la cellule source d'allouer (303, 304) des ressources de service par paquets au MT lorsque les ressources de la cellule source ne peuvent pas satisfaire à une exigence de QoS demandée par le MT ;
rejeter, par la cellule adjacente de la cellule source, la demande du MT, ou
demander, par la cellule adjacente de la cellule source, à une cellule adjacente de la cellule adjacente de la cellule source d'allouer des ressources de service par paquets au MT lorsque la cellule adjacente de la cellule source détermine que ses ressources ne peuvent pas satisfaire à l'exigence de QoS ; et
allouer, par la cellule adjacente de la cellule source, des ressources de service par paquets au MT lorsque la cellule adjacente de la cellule source détermine que ses ressources satisfont à l'exigence de QoS ;
où le MT demande à la cellule source d'allouer des ressources de service par paquets en envoyant une demande de ressources qui achemine l'exigence de QoS ;
la demande à une cellule adjacente d'allouer des ressources au MT comprend d'envoyer la demande de ressources qui achemine l'exigence de QoS à la cellule adjacente ; et
le rejet de la demande comprend les étapes suivantes :
retourner, par la cellule adjacente de la cellule source, la demande à la cellule source par un chemin de réception de la demande ; et
rejeter, par la cellule source, la demande lorsque la demande provenant de la cellule adjacente et la demande provenant du MT sont identiques.

2. Procédé selon la revendication 1, dans lequel la demande à une cellule adjacente d'allouer des ressources de service par paquets au MT, comprend l'étape suivante :
sélectionner, par la cellule source, une cellule adjacente parmi une ou plusieurs cellules adjacentes.

3. Procédé selon la revendication 1, comprenant en outre l'étape suivante :
sélectionner, par la cellule adjacente de la cellule source, une cellule adjacente parmi une ou plusieurs cellules adjacentes de la cellule adjacente de la cellule source.

4. Procédé selon l'une quelconque des revendications 2 et 3, dans lequel la sélection d'une cellule adjacente parmi une ou plusieurs cellules adjacentes comprend l'étape suivante :
sélectionner la cellule adjacente ayant la meilleure qualité de transmission parmi les une ou plusieurs cellules adjacentes.

5. Procédé selon l'une quelconque des revendications 2 et 3, dans lequel la sélection d'une cellule adjacente parmi une ou plusieurs cellules adjacentes comprend l'étape suivante :
sélectionner la cellule adjacente dont les ressources satisfont l'exigence de QoS parmi les une ou plusieurs cellules adjacentes.

6. Procédé selon l'une quelconque des revendications 2 et 3, dans lequel la sélection d'une cellule adjacente parmi les une ou plusieurs cellules adjacentes comprend les étapes suivantes :
sélectionner au moins une cellule adjacente dont les ressources satisfont l'exigence de QoS parmi les une ou plusieurs cellules adjacentes, et
sélectionner la cellule adjacente ayant la meilleure qualité de transmission parmi l'au moins une cellule adjacente.

7. Procédé selon la revendication 1, dans lequel le MT demande à la cellule source d'allouer des ressources de service par paquets en envoyant une demande de ressources qui achemine l'exigence de QoS, et la cellule source demande à la cellule adjacente de la cellule source d'allouer des ressources au MT en envoyant la demande de ressources qui achemine l'exigence de QoS à la cellule adjacente de la cellule source.

8. Procédé selon la revendication 4 ou la revendication 6, dans lequel la qualité de transmission des une ou plusieurs cellules adjacentes est rapportée par le MT.

9. Procédé selon la revendication 5 ou la revendication 6, dans lequel les informations sur les ressources de chacune des une ou plusieurs cellules adjacentes sont envoyées à la cellule source par chacune des une ou plusieurs cellules adjacentes ou sont obtenues depuis un contrôleur de station de base.
